# DEMANDE DE BREVET EUROPEEN

(11) **EP 3 690 840 A1**
(43) Date de publication de la demande: **05.08.2020**
(21) Numéro de dépôt: 20154349.3
(22) Date de dépôt: 29.01.2020
(51) Int. Cl.: G08B 13/196

(54) **DISPOSITIF ÉLECTRONIQUE DE GÉNÉRATION D'UN SIGNAL À L'INTÉRIEUR D'UN VÉHICULE, VÉHICULE, PROCÉDÉ DE GÉNÉRATION ET PROGRAMME D'ORDINATEUR ASSOCIÉS**

(30) Priorité: 29.01.2019 FR 1900792
(71) Demandeur: Transdev Group, 92130 Issy les Moulineaux (FR)
(72) Inventeur: DARNAUD, Thomas, 78000 VERSAILLES (FR)
(74) Mandataire: Lavoix

(57) **Abrégé**

L'invention concerne un dispositif électronique de génération d'un signal à l'intérieur d'un véhicule (12), notamment véhicule (12) automobile autonome, le véhicule (12) étant propre à recevoir un ensemble de passagers.

Le dispositif comporte :
- un module d'identification configuré pour identifier un passager d'intérêt (58) parmi l'ensemble de passagers (42) à l'intérieur du véhicule (12), via au moins un capteur embarqué à bord du véhicule (12) ;
- un module de détection configuré pour détecter au moins un évènement associé au passager d'intérêt (58) à partir d'au moins une information acquise de l'au moins un capteur embarqué ; et
- un module de génération configuré pour générer un signal d'information en fonction de l'événement détecté.

## Description

La présente invention concerne un dispositif électronique de génération d'un signal à l'intérieur d'un véhicule, notamment véhicule automobile autonome.

L'invention concerne également un véhicule, notamment véhicule autonome automobile, propre à recevoir un ensemble de passagers à l'intérieur du véhicule, le véhicule comprenant un tel dispositif électronique de génération et au moins un capteur embarqué relié au dispositif électronique de génération.

L'invention concerne aussi un programme d'ordinateur comportant des instructions logicielles qui, lorsqu'elles sont exécutées par un ordinateur, mettent en œuvre un tel procédé de génération.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA).

L'invention concerne en particulier le domaine des transports en commun. Le véhicule est alors par exemple un autobus ou un autocar.

On connait un dispositif de génération d'un signal à l'intérieur d'un véhicule de transport en commun permettant de fournir des informations générales à l'ensemble des passagers présents dans le véhicule comme par exemple l'annonce du prochain arrêt du véhicule.

Toutefois, la pertinence des informations fournis aux passagers à l'intérieur du véhicule peut encore être améliorée.

Le but de l'invention est alors de proposer un dispositif électronique de génération permettant d'améliorer encore la pertinence des informations envoyées aux passagers présents à l'intérieur de tels véhicules.

A cet effet, l'invention a pour objet un dispositif électronique de génération d'un signal à l'intérieur d'un véhicule, notamment véhicule automobile autonome, le véhicule étant propre à recevoir un ensemble de passagers, le dispositif comportant un module d'identification configuré pour identifier un passager d'intérêt parmi l'ensemble de passagers à l'intérieur du véhicule, via au moins un capteur embarqué à bord du véhicule ; un module de détection configuré pour détecter au moins un évènement associé au passager d'intérêt à partir d'au moins une information acquise de l'au moins un capteur embarqué ; et un module de génération configuré pour générer un signal d'information en fonction de l'événement détecté.

Ainsi, avec le dispositif électronique de génération selon l'invention, le module d'identification permet d'identifier un passager d'intérêt parmi l'ensemble des passagers présents dans le véhicule. Le module de détection permet alors de détecter un évènement associé au passager d'intérêt susceptible d'impacter le passager d'intérêt ou les autres passagers. Le module génération permet de générer un signal d'information en fonction de l'événement détecté. Le dispositif électronique de génération selon l'invention permet ainsi de fournir une information personnalisée directement au passager d'intérêt ou indirectement via un système électronique de supervision. Ceci est particulièrement avantageux lorsque le véhicule est un véhicule automobile autonome en raison de l'absence de conducteur pouvant communiquer avec les passagers.

Suivant d'autres aspects avantageux de l'invention, le dispositif électronique de génération comprend une ou plusieurs des caractéristiques suivantes, prises isolément ou suivant toutes les combinaisons techniquement possibles :
- l'au moins un capteur embarqué est choisi parmi le groupe consistant en : un capteur d'image(s) ; un capteur de présence ; un capteur sonore ; un capteur infrarouge ; un capteur de poids et un capteur de température ;
- le véhicule comprend au moins une place propre à recevoir un passager parmi l'ensemble de passagers, et dans lequel au moins capteur embarqué respectif est associé à chaque place ;
- au moins l'un des capteurs embarqués dans le véhicule est un capteur d'image, le module de détection étant configuré pour détecter ledit évènement par un traitement d'image(s) issue(s) du capteur d'image(s) associé à une méthode d'apprentissage automatique ;
- l'événement détecté est choisi parmi le groupe consistant en : une dégradation du véhicule commise par le passager d'intérêt ; un comportement menaçant du passager d'intérêt envers au moins un autre passager ; un endormissement au moins partiel du passager d'intérêt ; un malaise du passager d'intérêt ; un affolement du passager d'intérêt ; une peur du passager d'intérêt ; une blessure du passager d'intérêt ; des pleurs du passager d'intérêt ; et une mobilité réduite du passager d'intérêt ;
- le module de détection est configuré pour recevoir au moins une information complémentaire associée au passager d'intérêt, l'information complémentaire étant envoyée par un terminal mobile de l'un des passagers, le module de détection étant configuré pour détecter l'évènement associé au passager d'intérêt en outre à partir de l'information complémentaire ;
- le dispositif comprend en outre un module de localisation configuré pour déterminer une position du passager d'intérêt dans le véhicule à partir d'au moins une information acquise de l'au moins un capteur embarqué, la position déterminée étant de préférence une place du véhicule qui est occupée par le passager d'intérêt ;
- le dispositif comprend en outre un module de comptage configuré pour compter le nombre de passagers présents à l'intérieur du véhicule, le module de comptage étant propre à activer le module d'identification lorsque le module de comptage compte au moins deux passagers présents à l'intérieur du véhicule ; et
- le véhicule comprend plusieurs capteurs embarqués, et le dispositif comprend un module d'acquisition configuré pour acquérir au moins deux informations distinctes envoyées chacune par un capteur embarqué respectif, le module d'identification étant alors configuré pour identifier le passager d'intérêt en fonction d'une combinaison d'au moins deux des informations reçues.

L'invention a également pour objet un véhicule automobile autonome propre à recevoir un ensemble de passagers à l'intérieur du véhicule, le véhicule comprenant un tel dispositif électronique de génération et au moins un capteur embarqué relié au dispositif électronique de génération, le dispositif électronique de génération étant tel que défini ci-dessus.

L'invention a également pour objet un procédé de génération d'un signal à l'intérieur d'un véhicule, notamment véhicule automobile autonome, le procédé étant mis en œuvre par un dispositif électronique de génération, le véhicule étant propre à recevoir un ensemble de passagers, le procédé comportant les étapes suivantes :
- l'identification d'un passager d'intérêt parmi l'ensemble de passagers à l'intérieur du véhicule, via au moins un capteur embarqué à bord du véhicule;
- la détection d'au moins un évènement associé au passager d'intérêt à partir d'au moins une information acquise de l'au moins un capteur embarqué; et
- la génération d'un signal d'information en fonction de l'événement détecté.

L'invention a également pour objet un programme d'ordinateur comportant des instructions logicielles qui, lorsqu'elles sont exécutées par un ordinateur, mettent en œuvre un procédé de génération tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 une représentation schématique d'un système de transport, comprenant une pluralité de véhicules selon l'invention et un dispositif électronique de surveillance des véhicules ;
- la figure 2 est une vue en coupe verticale longitudinale de l'un des véhicules selon l'invention ;
- la figure 3 est une représentation schématique d'un dispositif électronique de génération embarqué à bord du véhicule de la figure 2 ; et
- la figure 4 est un organigramme d'un procédé, selon l'invention, de génération d'un signal à l'intérieur du véhicule de la figure 1.

Les termes « vertical » et « horizontal » s'entendent de manière générale par rapport aux directions usuelles d'un véhicule circulant sur une surface horizontale.

Le terme « longitudinal » est défini de manière générale par rapport à une direction horizontale et sensiblement parallèle à la direction de déplacement d'un véhicule.

Le terme « transversal » est défini de manière générale par rapport à une direction horizontale et sensiblement orthogonale à la direction de déplacement d'un véhicule.

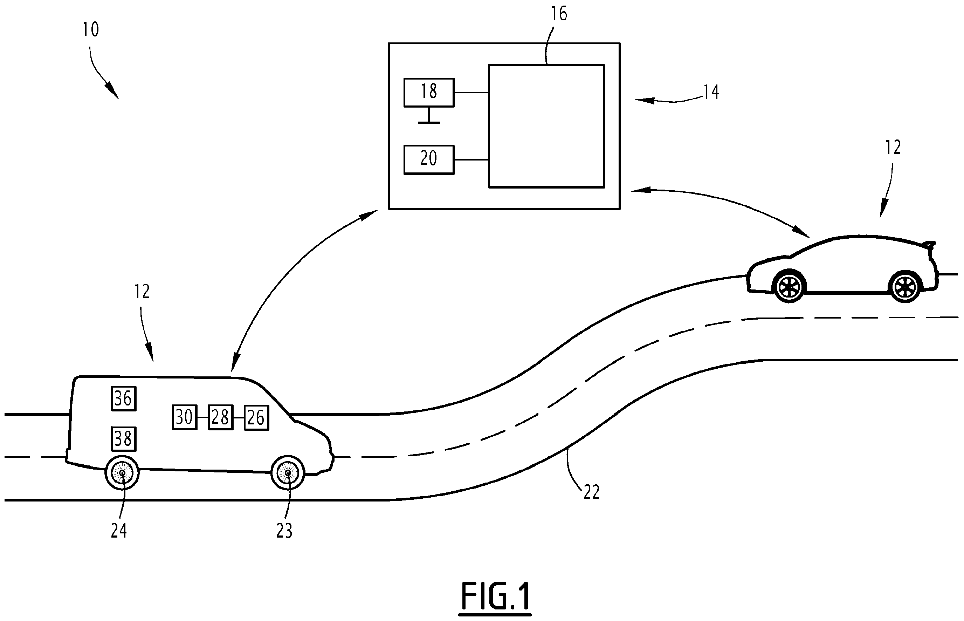

Un système de transport 10 est représenté sur la figure 1. Le système de transport 10 comprend au moins un véhicule 12 et une plateforme externe 14 de supervision de l'au moins un véhicule 12.

La plateforme externe de supervision 14 comprend un dispositif électronique 16 de surveillance de l'au moins un véhicule 12. En complément, la plateforme externe de supervision 14 comprend un écran d'affichage 18 et des moyens d'entrée/sortie 20, tels qu'un clavier et une souris, chacun étant relié au dispositif électronique de surveillance 16.

Chaque véhicule 12 est par exemple un véhicule automobile, en particulier un bus, configuré pour se déplacer sur une voie de circulation 22. La direction de déplacement du véhicule 12 définit un axe longitudinal A-A'. Le véhicule 12 s'étend le long de l'axe longitudinal A-A'.

Comme visible sur la figure 1, chaque véhicule 12 comprend, de manière connue, des roues arrière 23, des roues avant 24, un moteur 26 relié mécaniquement via une chaîne de transmission (non représentée) aux roues arrière 23 et/ou avant 24 pour l'entraînement desdites roues 23, 24 en rotation autour de leur axe, un système de direction (non représenté), adapté pour agir sur les roues 23 et/ou 24 du véhicule 12 de manière à modifier l'orientation de sa trajectoire, et un système de freinage (non représenté), adapté pour exercer une force de freinage sur les roues 23, 24 du véhicule 12.

Chaque véhicule automobile 12 est typiquement constitué par un véhicule à traction et/ou propulsion électrique. A cet effet, le moteur 26 est constitué par un moteur électrique, et le véhicule 12 comprend une batterie électrique (non représentée) raccordée électriquement au moteur 26 pour l'alimentation du moteur 26 en électricité.

Chaque véhicule automobile 12 est par exemple un véhicule autonome. A cet effet, le véhicule automobile 12 comprend un dispositif électronique de conduite autonome 28 adapté pour piloter le véhicule de manière autonome en recevant des informations sur l'environnement du véhicule 12 par l'intermédiaire d'au moins un capteur 30, également appelé capteur d'environnement, et en agissant sur le moteur 26, le système de direction et le système de freinage, de manière à modifier la vitesse, l'accélération et la trajectoire du véhicule 12 en réaction aux informations reçues. Chaque capteur d'environnement 30 est par exemple une caméra, un capteur de température, un capteur de pression, un capteur d'humidité ou un lidar.

Chaque véhicule automobile autonome 12 présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*)*,* ou égal à 4, c'est-à-dire une automatisation élevée (de l'anglais *High Automation*), ou encore égal à 5, c'est-à-dire une automatisation complète (de l'anglais *Full Automation*)*.*

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 12. Selon ce niveau 3, un système de gestion de la conduite autonome, embarqué à bord du véhicule automobile autonome 12, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 12, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 12, effectue la conduite dynamique latérale et longitudinale dans toutes les situations rencontrées par le véhicule automobile autonome 12, pendant tout son trajet. Aucun conducteur n'est alors requis.

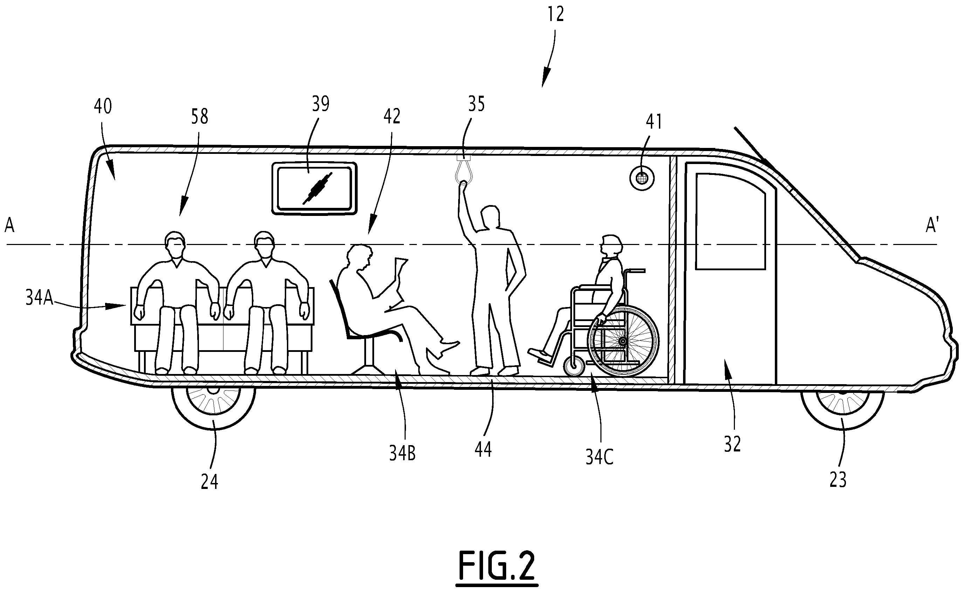

Comme visible sur la figure 2, le véhicule 12 comprend en outre avantageusement au moins une porte 32, au moins une place 34, au moins un capteur 36, également appelé capteur embarqué et un dispositif de génération 38 d'un signal à l'intérieur du véhicule 12.

Le véhicule 12 présente un volume intérieur 40 configuré pour recevoir un ensemble de passagers 42 et avantageusement des marchandises à transporter.

Le véhicule 12 comprend en outre avantageusement au moins un écran d'affichage 39 et au moins un haut-parleur 41 disposés dans le volume intérieur 40. Chaque écran 39 et chaque haut-parleur 41 sont propres à communiquer au moins une information aux passagers 42.

Le volume intérieur 40 communique avec l'extérieur du véhicule 12 au moins par la porte 32. La porte 32 est configurée pour permettre aux passagers et/ou marchandises de passer de l'extérieur à l'intérieur du volume intérieur 40, et inversement. Le volume intérieur 40 est notamment délimité par un plancher 44, sur lequel évoluent les passagers 42 et les marchandises à l'intérieur du volume intérieur 40. La porte 32 est en particulier une porte latérale définissant une ouverture transversale s'étendant verticalement depuis le plancher 44.

Chaque place 34 est propre à recevoir l'un des passagers 42. La place 34 est en particulier une place assise comme par exemple un siège ou une banquette, ou une place debout comme par exemple une poignée 35.

La place 34 est par exemple une place longitudinale 34A. La place longitudinale 34A désigne un siège ou une banquette dont le dossier s'étend sensiblement suivant l'axe longitudinal A-A'. La place longitudinale 34A est par exemple adossée à une face latérale du véhicule 12.

En variante, la place 34 est une place transversale 34B. La place transversale 34B désigne un siège ou une banquette dont le dossier s'étend sensiblement perpendiculairement à l'axe longitudinal A-A'.

En complément ou en variante, la place 34 est un emplacement réservé pour une personne à mobilité réduite 34C (noté PMR par la suite).

En complément ou en variante, la place 34 est une poignée 35 fixée dans le volume intérieur 40 du véhicule 12, notamment au plafond du véhicule 12. Chaque poignée 35 est propre à être saisie par l'un des passagers 42 debout sur le plancher 44 afin de garantir son équilibre en cas de mouvement brusque du véhicule 12.

En complément ou en variante, le véhicule 12 comprend des places 34 longitudinales 34A, des places transversales 34B, des emplacements réservés aux PMR 34C et des poignées 35.

Chaque capteur embarqué 36 est propre à fournir au moins une information relative à au moins l'un des passagers 42 à l'intérieur du véhicule 12. Chaque capteur embarqué 36 est choisi parmi le groupe consistant en : un capteur d'image(s), un capteur de présence, un capteur sonore, un capteur infrarouge, un capteur de poids et un capteur de température. Chaque capteur embarqué 36 est relié au dispositif électronique de génération 38.

Avantageusement, au moins un capteur embarqué 36 respectif est associé à chaque place 34. En complément optionnel, au moins un capteur embarqué 36 respectif est associé à chaque poignée 35.

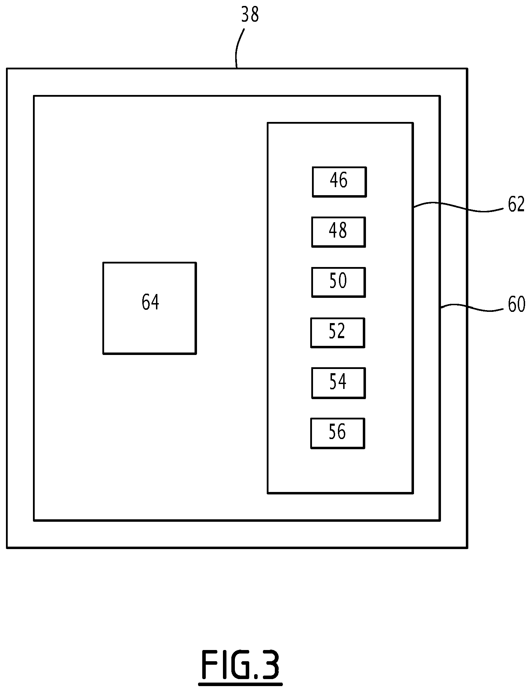

Comme visible sur la figure 3, le dispositif de génération 38 comprend un module d'identification 46, un module de détection 48, un module de génération 50 et avantageusement un module d'acquisition 52, un module de localisation 54 et un module de comptage 56.

Le module d'acquisition 52 est configuré pour acquérir au moins une information envoyée par un capteur embarqué 36.

Le module d'acquisition 52 est en outre avantageusement configuré pour attribuer un niveau de fiabilité à chaque information reçue en fonction du type de données reçues et de la pertinence du capteur embarqué 36 ayant envoyé l'information. La fiabilité d'un capteur embarqué 36 est par exemple déterminée par la mesure d'une marge d'erreur sur les mesures effectuées par ledit capteur embarqué 36. Avantageusement, le module d'acquisition 52 est configuré pour considérer l'information envoyée par un capteur 36 uniquement si la marge d'erreur associée à ce capteur 36 est inférieure à un seuil prédéterminé. La pertinence d'un capteur embarqué 36 est déterminée en fonction d'un niveau de corrélation de l'information déterminé par le capteur 36 avec un évènement associé. Par exemple, une image remontée par un capteur d'images est plus pertinente que la température remontée par un capteur de température afin de détecter un évènement associé.

En complément facultatif, le module d'acquisition 52 est en outre configuré pour attribuer un niveau de priorité à chaque information reçue. Le niveau de priorité de chaque information est par exemple déterminé à partir de l'amplitude de la mesure effectuée par le capteur embarqué 36, comme par exemple la détection d'un son d'intensité élevé ou d'un mouvement brusque.

Le module d'identification 46 est configuré pour identifier un passager d'intérêt 58 parmi l'ensemble de passagers 42 à l'intérieur du véhicule 12, via au moins l'un des capteurs embarqués 36 à bord du véhicule 12.

Avantageusement, le véhicule 12 comprend plusieurs capteurs embarqués 36, et le module d'acquisition 52 est configuré pour acquérir au moins deux informations distinctes envoyées chacune par un capteur respectif 36. En particulier, le module d'acquisition 52 est configuré pour acquérir, pour chaque capteur embarqué 36, au moins une information respective envoyée par ledit capteur 36. Le module d'identification 46 est configuré pour identifier le passager d'intérêt 58 en fonction d'une combinaison d'au moins deux des informations reçues. Par « identifier », on entend que le module d'identification 46 possède au moins une information permettant de différencier, c'est-à-dire de distinguer, et en complément de localiser, le passager d'intérêt 58 du reste des passagers 12. En particulier, le module d'identification 46 est propre à identifier le passager d'intérêt en l'associant à l'une des places 34 ou l'une des poignées 35.

Le module de détection 48 est configuré pour détecter au moins un évènement associé au passager d'intérêt 58 à partir d'au moins une information acquise de l'au moins un capteur embarqué 36.

Avantageusement, l'événement détecté est choisi parmi le groupe consistant en :
- une dégradation du véhicule 12 commise par le passager d'intérêt 58 ;
- un comportement menaçant du passager d'intérêt 58 envers au moins un autre passager 42 ;
- un endormissement au moins partiel du passager d'intérêt 58 ;
- un malaise du passager d'intérêt 58 ;
- un affolement du passager d'intérêt 58 ;
- une peur du passager d'intérêt 58 ;
- une blessure du passager d'intérêt 58 ;
- des pleurs du passager d'intérêt 58 ; et
- une mobilité réduite du passager d'intérêt 58.

Une dégradation du véhicule 12 est par exemple une détérioration de l'une des places 34 ou d'une paroi du véhicule 12, un graffiti dessiné dans le véhicule 12, la présence des pieds du passager d'intérêt 58 sur l'une des places 34, le jet d'un détritus dans le véhicule 12, etc.

Un comportement menaçant est par exemple une agression physique ou vocale du passager d'intérêt 58 envers au moins un autre passager 42. En particulier, un comportement menaçant est détecté lorsque le passager d'intérêt 58 est en possession d'une arme blanche, telle qu'un couteau, un cutter, ou d'une arme à feu, telle qu'un pistolet ou lorsque le passager d'intérêt 58 prononce des mots menaçants ou grossiers.

Un endormissement au moins partiel du passager d'intérêt 58 est associé à la fermeture des yeux du passager d'intérêt 58, à un ronflement ou une respiration forte du passager d'intérêt 58.

Un malaise est une altération de la conscience du passager d'intérêt 58 pouvant éventuellement causer une perte de connaissance du passager d'intérêt 58. Le malaise est par exemple associé à des sueurs, des pâleurs, des convulsions, une chute, une immobilisation du passager d'intérêt 58, etc.

Un affolement est associé à une panique du passager d'intérêt 58, avec éventuellement des mouvements brusques et désorganisés du passager d'intérêt 58 et des cris ou un langage caractéristique d'une panique de la part du passager d'intérêt 58.

Une peur est associée à une forte crainte du passager d'intérêt 58 éventuellement pétrifié et restant immobile associé à un faciès et un langage caractéristique d'une peur de la part du passager d'intérêt 58.

Une blessure est une lésion du corps du passager d'intérêt 58, telle qu'une rupture d'un os ou une plaie sur sa peau.

Les pleurs sont associés à des larmes coulant des yeux du passager d'intérêt 38, éventuellement accompagnées de plaintes vocales de la part du passager d'intérêt 58.

Une mobilité réduite du passager d'intérêt 58 est associée à une gêne du passager d'intérêt 58 dans ses mouvements et ses déplacements de manière provisoire ou permanente, que ce soit en raison de sa taille, son état (maladie, surpoids...), son âge, son handicap permanent ou temporaire, des objets ou personnes qu'elle transporte, ou des appareils ou instruments auxquels elle doit recourir pour se déplacer.

Dans un mode de réalisation avantageux, lorsqu'au moins l'un des capteurs embarqués 36 dans le véhicule 12 est un capteur d'image(s), le module de détection 48 est configuré pour détecter ledit évènement par un traitement d'image(s) issue(s) du capteur d'image(s) associé à une méthode d'apprentissage automatique (de l'anglais *machine learning*).

La méthode d'apprentissage automatique se base, par exemple, sur un modèle utilisant une approche statistique afin de permettre d'améliorer les performances de cette méthode à résoudre des tâches sans être explicitement programmé pour chacune de ces tâches. L'apprentissage automatique comporte deux phases. La première phase consiste à définir un modèle à partir de données présentes dans une base de données, appelées observations. L'estimation du modèle consiste en particulier à reconnaître la présence d'un ou plusieurs objets dans une image. Cette phase dite d'apprentissage est généralement réalisée préalablement à l'utilisation pratique du modèle. La seconde phase correspond à l'utilisation du modèle : le modèle étant défini, de nouvelles images peuvent alors être soumises au modèle afin d'obtenir le ou les objets détectés sur lesdites images.

En particulier, la méthode d'apprentissage automatique est propre à détecter des objets associés au passager d'intérêt 58 et caractéristiques d'un événement, tel qu'un feutre ou un détritus associés à une dégradation du véhicule 12, un couteau ou une arme associés à un comportement menaçant, une canne ou un fauteuil roulant associés à une mobilité réduite du passager d'intérêt 58.

La méthode d'apprentissage automatique est en outre propre à détecter les émotions du passager d'intérêt 58 caractéristiques d'un évènement tel que de la douleur associée à une blessure, la panique associée à un affolement ou la crainte associée à la peur. La méthode d'apprentissage automatique est en outre propre à détecter les dégradations réalisées par le passager d'intérêt 58 par comparaison des images dans le temps.

Le modèle d'apprentissage automatique comporte par exemple la mise en œuvre d'un réseau de neurones. Un réseau de neurones est en général composé d'une succession de couches dont chacune prend ses entrées sur les sorties de la précédente. Chaque couche est composée d'une pluralité de neurones, prenant leurs entrées sur les neurones de la couche précédente. À chaque synapse entre neurones est associée un poids synaptique, de sorte que les entrées reçues par un neurone sont multipliées par ce poids, puis additionnées par ledit neurone. Le réseau de neurones est optimisé grâce aux ajustements des différents poids synaptiques pendant la phase d'apprentissage en fonction des images présentes dans la base de données initiale.

En complément ou en variante, lorsqu'au moins l'un des capteurs embarqués 36 dans le véhicule 12 est un capteur sonore, le module de détection 48 est configuré pour détecter ledit évènement par détection de sons caractéristiques d'un événement. Par exemple la détection d'expressions, telles que « A l'aide » ou « S.O.S. », est associée à un affolement du passager d'intérêt 58 ou à un comportement menaçant, et la détection de sanglots est associée à des pleurs ou à une blessure du passager d'intérêt 58.

En complément, le module de détection 48 est configuré pour recevoir au moins une information complémentaire associée au passager d'intérêt 58. L'information complémentaire est envoyée par un terminal mobile de l'un des passagers 42, en particulier via une application dédiée. L'information complémentaire est par exemple une information signalant une dégradation réalisée par le passager d'intérêt 58 ou un comportement menaçant de la part du passager d'intérêt 58. Le module de détection 48 est configuré pour détecter l'évènement associé au passager d'intérêt 58 en outre à partir de l'information complémentaire.

En complément facultatif, le module de détection 48 est en outre configuré pour attribuer un niveau de priorité à chaque évènement détecté. Le niveau de priorité de chaque évènement est par exemple déterminé par le type d'événement détecté et par la gravité de l'événement détecté. En particulier, plus un évènement est susceptible d'affecter la sécurité des passagers 42 du véhicule 12, plus le module de détection 48 attribue à cet évènement un niveau de priorité élevé. Par exemple, la détection d'une blessure du passager d'intérêt 58 présente une priorité supérieure à la détection d'un endormissement au moins partiel du passager d'intérêt 58.

Avantageusement, le module de détection 48 est propre à transmettre une information relative à l'événement détecté à la plateforme externe 14 de supervision ou au dispositif électronique de conduite autonome 28 par exemple. La plateforme externe 14 ou le dispositif électronique de conduite autonome 28 sont alors propres à mettre en œuvre une action en fonction de l'événement détecté. Par exemple, en cas de blessure du passager d'intérêt 58, la plateforme externe 14 est propre à prévenir les urgences médicales afin de faire venir une ambulance au niveau du véhicule 12. En cas de comportement menaçant du passager d'intérêt 58, le dispositif électronique de conduite autonome 28 est propre à arrêter le véhicule 12 et ouvrir la porte 32 afin que les autres passagers 42 puissent sortir du véhicule 12.

Le module de génération 50 est configuré pour générer un signal d'information en fonction de l'événement détecté par le module de détection 48.

Le signal d'information est destiné au passager d'intérêt 58 et/ou au reste des passagers 42. Le signal d'information comprend par exemple une information relative à la nature de l'évènement détecté, un message d'information informant qu'une action relative à l'événement détecté est en cours ou un message de consigne(s) aux passagers 42.

Le signal d'information est par exemple un signal visuel. Le module de génération 50 est alors propre à envoyer le signal d'information à l'écran d'affichage 39 situé dans le véhicule 12. En variante ou en complément, le signal d'information est un signal sonore. Le module de génération 50 est alors propre à envoyer le signal d'information au haut-parleur 41 situé dans le véhicule 12.

Dans un mode de réalisation avantageux, le module de localisation 54 est configuré pour déterminer une position du passager d'intérêt 58 dans le véhicule 12 à partir de l'au moins une information acquise de l'au moins un capteur embarqué 36.

La position déterminée est de préférence la place 34 qui est occupée par le passager d'intérêt 58.

Par exemple, la position du passager d'intérêt 58 est déterminée par un traitement d'images issues du capteur d'images ou à partir des informations issues du capteur 36 associé à ladite place 34 ou poignée 35, tel que le capteur de présence, le capteur de poids ou le capteur de température.

Le module de localisation 54 est avantageusement propre à envoyer la localisation du passager d'intérêt 58 au module de génération 50 afin que le signal d'information destiné au passager d'intérêt 58 soit envoyé uniquement aux écrans 39 ou aux haut-parleurs 41 à proximité du passager d'intérêt 58. Par « proximité », on entend que les écrans ou les haut-parleurs sont situés à une distance inférieure à 2 m du passager d'intérêt 58.

En variante, le module de génération 50 est propre à envoyer le signal d'information destiné uniquement aux écrans 39 ou aux haut-parleurs 41 éloignés du passager d'intérêt 58. Par « éloignés », on entend que les écrans ou les haut-parleurs sont situés à une distance supérieure à une distance seuil du passager d'intérêt 58. La distance seuil est par exemple comprise entre 1 m et 3 m. En outre, le module de génération 50 est propre à adapter la distance seuil en fonction de l'événement détecté. Cette variante est particulièrement avantageuse dans le cas d'une détection d'une agression par le passager d'intérêt 58 et où les informations sont destinées aux autres passagers 42 du véhicule 12.

Le module de comptage 56 est configuré pour compter le nombre de passagers 42 présents à l'intérieur du véhicule 12.

Avantageusement, le module de comptage 56 est propre à activer le module d'identification 46 lorsque le module de comptage 56 compte au moins deux passagers 42 présents à l'intérieur du véhicule 12.

Par exemple, le module de comptage 56 est relié à un capteur infrarouge situé au niveau de la porte 32 du véhicule 12 ou est propre à effectuer un traitement d'images issues du capteur d'images.

Dans l'exemple de la figure 3, le dispositif de génération 38 comprend une unité de traitement d'informations 60 formée par exemple d'une mémoire 62 et d'un processeur 64 associé à la mémoire 62.

Dans l'exemple de la figure 3, le module d'identification 46, le module de détection 48, le module de génération 50, le module d'acquisition 52, le module de localisation 54 et le module de comptage 56 sont réalisés chacun sous forme d'un logiciel, ou d'une brique logicielle, exécutables par le processeur 64. La mémoire 62 est alors apte à stocker un logiciel d'identification, un logiciel de détection, un logiciel de génération, un logiciel d'acquisition, un logiciel de localisation et un logiciel de comptage. Le processeur 64 est alors apte à exécuter chacun des logiciels.

En variante non représentée, le module d'identification 46, le module de détection 48, le module de génération 50, le module d'acquisition 52, le module de localisation 54 et le module de comptage 56 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit).*

Lorsque le dispositif de génération 38 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

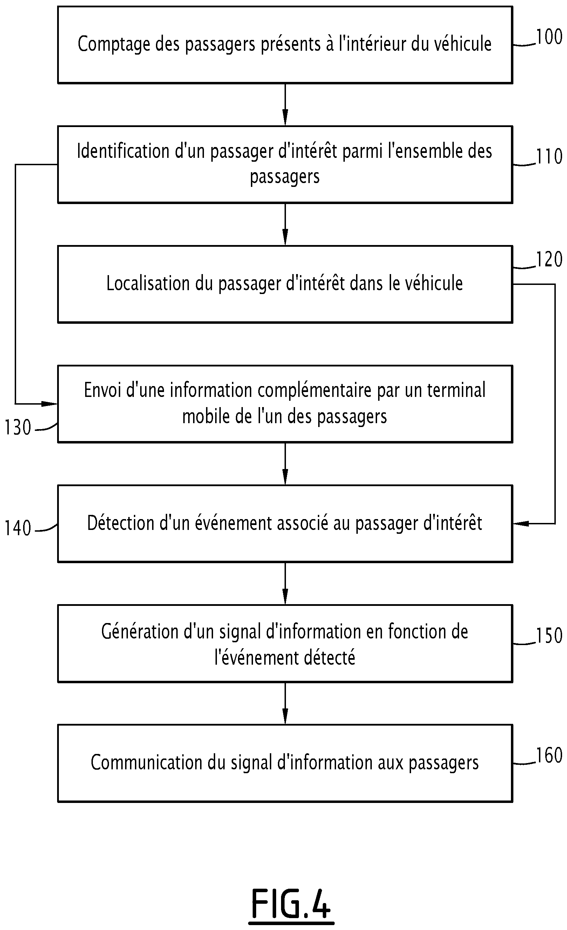

Le fonctionnement du dispositif électronique de génération 38 selon l'invention va désormais être expliqué à l'aide de la figure 4 représentant un organigramme du procédé, selon l'invention, de génération d'un signal à l'intérieur d'un véhicule 12, le procédé étant mis en œuvre par le dispositif électronique de génération 38.

Initialement, le véhicule automobile autonome 12 circule sur la voie de circulation 22 ou est à l'arrêt.

Dans une étape initiale 100 optionnelle, le module de comptage 56 compte le nombre de passagers 42 présents à l'intérieur du véhicule 12.

Lorsque le module de comptage 56 compte au moins deux passagers 42 présents à l'intérieur du véhicule 12, le module de comptage 56 active le module d'identification 46.

En variante, le module d'identification 46 est activé en permanence lorsque le véhicule 12 est en marche.

Puis, le procédé comprend une étape 110 d'identification du passager d'intérêt 58 parmi l'ensemble de passagers 42 à l'intérieur du véhicule 12 via l'au moins un capteur embarqué 36 à bord du véhicule 12.

Avantageusement, le module d'identification 46 identifie le passager d'intérêt 58 en fonction d'une combinaison d'au moins deux des informations reçues par au moins deux capteurs embarqués 36.

Le procédé comprend ensuite une étape 120 optionnelle de localisation du passager d'intérêt 58 par détermination de la position du passager d'intérêt 58 dans le véhicule 12 à partir de l'une des informations acquises de l'au moins un capteur embarqué 36. La position déterminée est de préférence une place 34 du véhicule 12 qui est occupée par le passager d'intérêt 58 ou une poignée 35 saisie par le passager d'intérêt 58.

La ou les informations relatives au passager d'intérêt 58 sont envoyées au module de détection 48.

En parallèle de l'étape 120, lors d'une étape optionnelle 130, au moins une information complémentaire associée au passager d'intérêt 58 est envoyée par un terminal mobile de l'un des passagers 42 présents dans le véhicule 12 au module de détection 48.

Puis, lors d'une étape 140, le module de détection 48 détecte au moins un évènement associé au passager d'intérêt 58 à partir de l'au moins une information acquise de l'au moins un capteur embarqué 36, et avantageusement à partir de l'information complémentaire envoyée par le terminal mobile de l'un des passagers 42.

Avantageusement, l'évènement détecté est choisi parmi le groupe consistant en : une dégradation du véhicule 12 commise par le passager d'intérêt 58, un comportement menaçant du passager d'intérêt 58 envers au moins un autre passager 42, un endormissement au moins partiel du passager d'intérêt 58, un malaise du passager d'intérêt 58, un affolement du passager d'intérêt 58, une peur du passager d'intérêt 58, une blessure du passager d'intérêt 58, des pleurs du passager d'intérêt 58 et une mobilité réduite du passager d'intérêt 58.

Le procédé comprend ensuite une étape 150 de génération du signal d'information destiné au passager d'intérêt 58 et/ou au reste des passagers 42 en fonction de l'événement détecté par le module de détection 48. Le signal d'information comprend par exemple une information relative à la nature de l'évènement détecté, un message d'information informant qu'une action relative à l'événement détecté est en cours ou un message de consignes aux passagers 42.

Le module de génération 50 envoie le signal d'information à l'au moins un écran d'affichage 39 ou à l'au moins un haut-parleur 41 situés dans le véhicule 12.

Avantageusement, le module de génération 50 envoie le signal d'information à l'un des écrans 39 ou à l'un des haut-parleurs 41 situés à proximité du passager d'intérêt 58.

Puis, lors d'une étape 160, le signal d'information est communiqué au passager d'intérêt 58 et/ou au reste des passagers 42 via l'écran d'affichage 39 ou le haut-parleur 41.

On conçoit alors que la présente invention présente un certain nombre d'avantages.

Le dispositif de génération 38 selon l'invention permet de générer des informations plus pertinentes aux passagers 42 du véhicule 12.

En effet, l'identification d'un passager d'intérêt 58 parmi l'ensemble des passagers 42 permet d'effectuer un traitement personnalisé pour chaque passager 42, et ainsi obtenir des informations plus pertinentes pour chaque passager 42.

En particulier, la détection d'un évènement associé à ce passager d'intérêt 58 et la génération d'un signal d'information en fonction de l'événement détecté permettent d'obtenir une information ciblée et adaptée à la situation du passager d'intérêt 58 et des autres passagers 42.

Il est ainsi possible, au moyen de la localisation du passager d'intérêt 58 dans le véhicule 12, de lui communiquer l'information via l'écran 39 ou le haut-parleur 41 à proximité. L'information communiquée à chaque passager 42 est ainsi personnalisée et donc plus pertinente.

De plus, la détection à partir d'une combinaison d'informations de plusieurs capteurs embarqués 36 et/ou à partir d'une information complémentaire envoyée par un terminal mobile de l'un des passagers 42, permet d'obtenir une détection de l'événement plus précise, et ainsi de fournir une information aux passagers 42 en meilleure adéquation avec la réalité de la situation dans le véhicule 12.

L'invention permet donc en particulier d'améliorer le confort du transport pour les passagers 42, par exemple en les informant ou en les rassurant suite à un évènement ayant eu lieu dans le véhicule 12.

L'invention permet également d'améliorer la sécurité des passagers 42 en détectant des incivilités ou des agressions ayant lieu dans le véhicule 12 et en informant le reste des passagers 42 et la plateforme externe de supervision 14 de cet incident, afin qu'une réaction rapide soit mise en place.

## Revendications

1. Dispositif électronique de génération (38) d'un signal à l'intérieur d'un véhicule (12), notamment véhicule (12) automobile autonome, le véhicule (12) étant propre à recevoir un ensemble de passagers, le dispositif (38) comportant :
- un module d'identification (46) configuré pour identifier un passager d'intérêt (58) parmi l'ensemble de passagers (42) à l'intérieur du véhicule (12), via au moins un capteur embarqué (36) à bord du véhicule (12) ;
- un module de détection (48) configuré pour détecter au moins un évènement associé au passager d'intérêt (58) à partir d'au moins une information acquise de l'au moins un capteur embarqué (36) ; et
- un module de génération (50) configuré pour générer un signal d'information en fonction de l'événement détecté.

2. Dispositif (38) selon la revendication 1, dans lequel l'au moins un capteur embarqué (36) est choisi parmi le groupe consistant en : un capteur d'image(s) ; un capteur de présence ; un capteur sonore ; un capteur infrarouge ; un capteur de poids et un capteur de température.

3. Dispositif (38) selon la revendication 1 ou 2, dans lequel le véhicule (12) comprend au moins une place (34) propre à recevoir un passager (42) parmi l'ensemble de passagers (42), et dans lequel au moins capteur embarqué (36) respectif est associé à chaque place (34).

4. Dispositif (38) selon l'une quelconque des revendications précédentes, dans lequel au moins l'un des capteurs embarqués (36) dans le véhicule (12) est un capteur d'image(s), le module de détection (48) étant configuré pour détecter ledit évènement par un traitement d'image(s) issue(s) du capteur d'image(s) associé à une méthode d'apprentissage automatique.

5. Dispositif (38) selon l'une quelconque des revendications précédentes, dans lequel l'évènement détecté est choisi parmi le groupe consistant en :
- une dégradation du véhicule (12) commise par le passager d'intérêt (58) ;
- un comportement menaçant du passager d'intérêt (58) envers au moins un autre passager (42) ;
- un endormissement au moins partiel du passager d'intérêt (58) ;
- un malaise du passager d'intérêt (58) ;
- un affolement du passager d'intérêt (58) ;
- une peur du passager d'intérêt (58) ;
- une blessure du passager d'intérêt (58) ;
- des pleurs du passager d'intérêt (58) ; et
- une mobilité réduite du passager d'intérêt (58).

6. Dispositif (38) selon l'une quelconque des revendications précédentes, dans lequel le module de détection (48) est configuré pour recevoir au moins une information complémentaire associée au passager d'intérêt (58), l'information complémentaire étant envoyée par un terminal mobile de l'un des passagers (42), le module de détection (48) étant configuré pour détecter l'événement associé au passager d'intérêt (58) en outre à partir de l'information complémentaire.

7. Dispositif (38) selon l'une quelconque des revendications précédentes, dans lequel le dispositif (38) comprend en outre un module de localisation (54) configuré pour déterminer une position du passager d'intérêt (58) dans le véhicule (12) à partir d'au moins une information acquise de l'au moins un capteur embarqué (36), la position déterminée étant de préférence une place (34) du véhicule (12) qui est occupée par le passager d'intérêt (58).

8. Dispositif (38) selon l'une quelconque des revendications précédentes, dans lequel le dispositif (38) comprend en outre un module de comptage (56) configuré pour compter le nombre de passagers (42) présents à l'intérieur du véhicule (12), le module de comptage (56) étant propre à activer le module d'identification (46) lorsque le module de comptage (56) compte au moins deux passagers (42) présents à l'intérieur du véhicule (12).

9. Dispositif (38) selon l'une quelconque des revendications précédentes, dans lequel le véhicule (12) comprend plusieurs capteurs embarqués (36), et le dispositif (38) comprend un module d'acquisition (52) configuré pour acquérir au moins deux informations distinctes envoyées chacune par un capteur embarqué (36) respectif, le module d'identification (46) étant alors configuré pour identifier le passager d'intérêt (58) en fonction d'une combinaison d'au moins deux des informations reçues.

10. Véhicule (12), notamment véhicule (12) automobile autonome, propre à recevoir un ensemble de passagers (42), le véhicule (12) comprenant :
- un dispositif électronique de génération (38) d'un signal à l'intérieur d'un véhicule (12) ; et
- au moins un capteur embarqué (36) relié au dispositif électronique de génération (38) ; **caractérisé en ce que** le dispositif électronique de génération (38) est selon l'une quelconque des revendications précédentes.

11. Procédé de génération d'un signal à l'intérieur d'un véhicule (12), notamment véhicule (12) automobile autonome, le procédé étant mis en œuvre par un dispositif électronique de génération (38), le véhicule (12) étant propre à recevoir un ensemble de passagers (42), le procédé comportant les étapes suivantes :
- l'identification d'un passager d'intérêt (58) parmi l'ensemble de passagers (42) à l'intérieur du véhicule (12), via au moins un capteur embarqué (36) à bord du véhicule (12);
- la détection d'au moins un évènement associé au passager d'intérêt (58) à partir d'au moins une information acquise de l'au moins un capteur embarqué (36); et
- la génération d'un signal d'information en fonction de l'événement détecté.

12. Programme d'ordinateur comportant des instructions logicielles qui, lorsqu'elles sont exécutées par un ordinateur, mettent en œuvre un procédé de génération selon la revendication précédente.
